# EUROPEAN PATENT APPLICATION

(11) **EP 4 718 359 A1**
(43) Date of publication of application: **01.04.2026**
(21) Application number: 24218635.1
(22) Date of filing: 10.12.2024
(51) Int. Cl.: G06Q 20/32, G06Q 20/34, G07G 1/00

(54) **COMPUTER-IMPLEMENTED METHOD AND SYSTEM**

(30) Priority: 25.09.2024 IN 202441072487
(71) Applicant: NXP B.V., 5656 AG Eindhoven (NL)
(72) Inventor: Gajanan, Vinayak, 5656AG Eindhoven (NL); Irulandy Gopalakrishnan, Elango Pandiyan, 5656AG Eindhoven (NL)
(74) Representative: Krott, Michel

(57) **Abstract**

A computer-implemented method is provided which simplifies the configuration of smartcard readers and enables use-case specific APDUs to be provided. The command-response interactions associated with smartcard interactions can be identified using a script by the user. The interaction can be used to execute an instruction by associated logic.

## Description

### FIELD

The invention relates to a method and system. Particularly, but not exclusively, the invention relates to a computer-implemented method and system. Further particularly, but not exclusively, the invention relates to a computer-implemented method of processing data receiving during an interaction between a smartcard and a processing device.

### BACKGROUND

The use of smartcards, such as those containing integrated chips, is growing rapidly. They have a wide variety of uses and are commonly used in applications such as loyalty cards, access control, transport and payments.

The wide variety of applications means they are popular with users who like to develop their own solutions for these smartcards and how they are used. However, this is difficult to implement as smartcard readers are difficult to configure without knowledge of operations pertaining to individual smartcards.

The development of smartcard based applications is therefore hindered as it is not straightforward to implement these applications.

Aspects and embodiments were conceived with the foregoing in mind.

### SUMMARY

Aspects relate to processing data received during an interaction between a smartcard and a processing device. The processing device may be any computing resource which has processing capacity.

Viewed from a first aspect, there may be provided a computer-implemented method of processing data received on a smartcard reader from a smartcard. The smartcard may be a physical or a virtual smartcard. The physical and virtual smartcards (and smartcard reader) may be configured with integrated circuits which can interact with radio frequency identification (RFID) or near-field communication (NFC) technology. The smartcard reader may be housed within a payment transaction processing device. The method may be implemented by a processing resource. The processing resource may be software or hardware implemented. The processing resource may be housed in the cloud and may be provided as part of a cloud based service. The processing resource may be located remotely relative to a resource or entity which is to be controlled by the interactions between the smartcard and the smartcard reader The method may comprise obtaining instructions for a smartcard reader, wherein the instructions identify at least one of data and data locations on a smartcard and/or at least one processing function for the data or data locations, wherein the instructions utilise a plurality of functions provided in a first programming language. The instructions may use functions applied to variables in a first programming language and may also identify locations of data on a smartcard in accordance with the smartcard application protocol data unit standard as set out in ISO/IEC 7816-4. The method may further comprise processing an interaction between the smartcard reader and the smartcard based on the instructions. The interaction may be associated with a financial transaction and may comprise the transfer of payment instructions. The processing may comprise utilising the data and data locations to identify and obtain the data from the smartcard during the interaction. The method may comprise processing the data obtained from the smartcard based on the instructions to generate an input data set for the smartcard reader. The method may comprise processing the input data set to generate a command for an entity external to the smartcard reader. The processing may utilise a second programming language distinct from the first programming language to process the input data set. The entity may be located remotely relative to the smartcard reader in that it may be in a geographically distinct location.

A method in accordance with the first aspect enables a smartcard reader to be configured. The configuration is achieved more simply by way of a set of instructions which is interpreted to generate a set of commands which are used to determine the interactions. The configuration of the smartcard requires only knowledge of the functions provided by the first programming language which abstracts the generation of smartcard commands to support faster deployment of smartcard-based solutions, upgrades and reduced maintenance.

Optionally, the processing of the data obtained from the smartcard based on the instructions to generate an input data set comprises at least one of authentication of data associated with the smartcard, validation of data associated with the smartcard, verification of data associated with the smartcard or providing one of a create, read, update or delete operation for the smartcard. The authentication of data may comprise authentication and/or verification of a public key retrieved from the smartcard using data provided by the script. The public key may be verified using a digital signature or a hash of the public key. Authentication of data may also authenticate data based on cryptographic keys provided using keys provided by the user (e.g. in the instructions or in a script containing the instructions). Authentication of data may be based on cryptographic keys (i.e. private keys and public keys) provided from an external entity (external and/or separate to the processing resource). Key diversification may be deployed for symmetric keys to generate further diversified keys based on the smartcard data received at the APDU interface.

The first programming language may be a domain specific language and/or the second programming language is a general purpose language. A domain specific language may be understood to mean a programming language which is targeted to a specific application, e.g. loyalty cards, access control, transport. The general purpose language may be one of C, C++, Java or Python.

Obtaining instructions may comprises receiving a script containing the instructions from an external entity at the smartcard reader. The external entity may be a desktop application or a server. The script may be processed to extract the instructions from the script. This may comprise interpreting the script in that it executes the instructions without converting the instructions into machine code or the general purpose language used in the smartcard logic.

Obtaining instructions may comprise receiving instructions from an external resource; wherein the instructions are generated based on input at an external entity. The external entity may be an external computer or computing device which may be associated with a user profile. The external resource may be a server or another network entity which can transmit data to the smartcard reader.

Processing an interaction between the smartcard reader and the smartcard based on the instructions may be responsive to a request for an interaction between a smartcard and a smartcard reader, and may also comprise mutual authentication based on cryptographic keys, provided using keys provided by the user (e.g. in the instructions or in a script containing the instructions).The request may be received at an RFID or NFC tag. The request may be received at an access control point.

Utilising the data and data locations to identify and obtain the data from the smartcard during the interaction may comprises formatting a command-response interaction with the smartcard. This may comprise formatting command application protocol data units in accordance with ISO/IEC 7816-4, i.e. formatting a command APDU to obtain the required data. This may be by using the data in the script to identify the data on the smartcard.

Generating a command for an entity external to the smartcard reader may comprise processing the input data set to determine whether the smartcard can enable access to a resource or location; and enabling access based on the processing of the input data set. This may be achieved by verification of public key data (e.g. a public key) or other cryptographic data provided during the interaction with the smartcard, wherein the public key data is identified based on location information provided in the instructions.

Generating a command for an entity external to the smartcard reader may comprise processing the input data set to determine whether an individual associated with the smartcard is a customer associated with a customer profile.

The interaction may be associated with preparing the smartcard blank data structures (i.e Pre-personalization) and user specific keys and content (i.e Personalization) of the smartcard and the associated data structures.

The processing resource may be housed (i.e. at least partially contained) within the smartcard reader. The processing resource may be housed within a desktop computer.

Further aspects may provide systems, smartcard reader, payment processing device and/or non-transitory computer readable storage medium may also be provided.

### DESCRIPTION

An embodiment will now be described by way of example only and with reference to the following drawings in which:
Figure 1 illustrates a series of steps which are used in a method in accordance with the embodiment;
Figure 2A illustrates a smartcard reader in accordance with the embodiment;
Figure 2B illustrates an alternative setup in accordance with the embodiment;
Figure 3 illustrates a processing resource which can be used in accordance with the embodiment;
Figure 4 illustrates the code at the logic module without the interpretation module; and
Figure 5 illustrates the code at the logic module with the interpretation module.

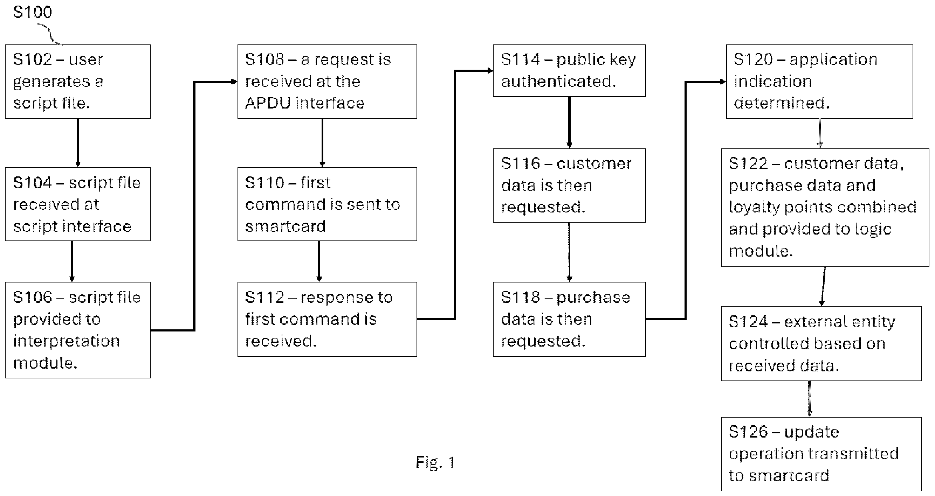

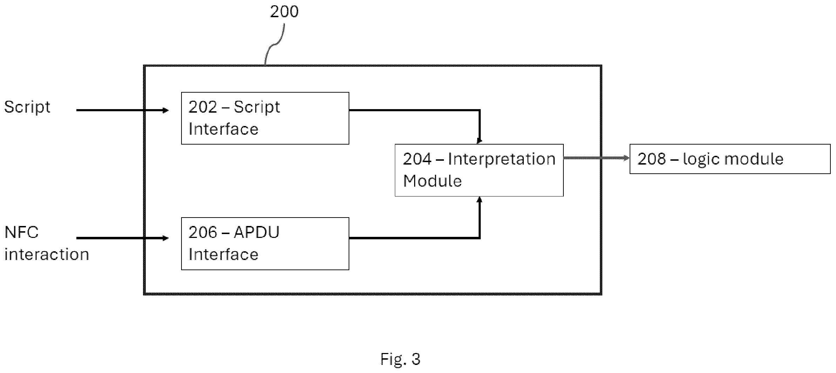

We now describe, with reference to Figures 1 to 5, a processing resource 200 in accordance with the embodiment and how it is used to implement a method of processing data received from a smartcard 302.

A smartcard 302 is generally understood as a portable, physical card which includes an embedded integrated chip (IC) which can be used to implement operations such as personal identification, authentication, data storage and application processing. They are frequently used in many industries such as, for example, finance, public transport, computer security, schools and healthcare. They are also popular where loyalty card schemes are interested as they can be used to register input into a retailers computer systems to increment or decrement loyalty point scores.

A smartcard 302 may also be understood as a virtual card which are implemented using the trusted platform module which is available on many modem computing devices. They similarly can be used for authentication to resources external to computing devices. They can also be used in applications such as, for example, the use of digital signatures to confirm the integrity and origin of data by storing the key (which is the source of the signature) in the virtual smartcard.

Virtual smartcards are instantiated in a form factor such as, for example, a mobile telephone or a wearable and they are typically tapped against a smartcard reader (e.g. NFC tag) to initialize an interaction and provide data in accordance with the smartcard application protocol data unit (APDU) standard (ISO/IEC 7816-4).

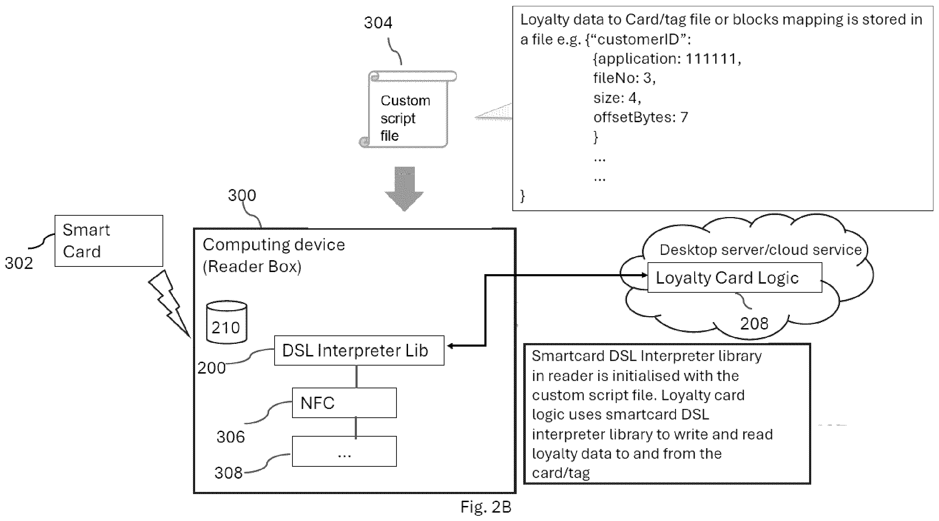

The processing resource 200 comprises a script interface 202, an APDU interface 206 and an interpretation module 204. The interpretation module 204 may be configured to communicate with a logic module 208. Each of the script interface 202, the APDU interface 206 and the interpretation module 204 are configured to communicate with one another using any suitable protocol or telecommunications medium. The interpretation module 204 is configured to transmit data to the logic module 208 and to receive data from the logic module 208 using any suitable protocol. The logic module 208 may, for example, be located in a location which is distinct from the location of the interpretation module 204. This is illustrated in Figure 2B where the logic module 208 is located remotely relative to the processing resource 200, and therefore located remotely relative to the interpretation module 204.

We first describe a method S 100 of how a processing resource 200 enables data to be processed during an interaction between a smartcard 302 and a smartcard reader 300 which houses the processing resource 200. Whilst the example described utilises NFC communication, it will be understood that the concepts can be applied to MiFare^{®} smartcards.

In a step S102, a user of the smartcard reader 300 generates a script file 304. The generation of the script file comprises identification of the data structures which are contained on the smartcard and where data items are stored on the smartcard. This may be performed by system designers and smartcard domain experts to meet the use-cases of the user. In the example of loyalty cards, the smartcard would be designed to store details like customer identifiers and loyalty points associated with the customer profile. The generation of the script file would involve providing the identification and location data which would enable that data to be identified and retrieved from the smartcard.

The generation of the script may be enabled by a graphical user interface (GUI)-based application which displays the data structure layout of the smartcard. The GUI allows the selection of the different functions (authenticate, verify etc) provided by the interpretation module 204 and the specification of which data items from the smartcard are to be used by those functions. The generation of the script may be enabled by a cloud-based service (with or without a web portal) which also provides a representation of the data structures on the smartcard.

The generated script file 304 contains instructions which the user wishes to be implemented by the smartcard reader 300 during interactions (e.g. command and response application protocol data unit operations) between the smartcard reader 300 and the smartcard 302, i.e. during the extraction of data from the smartcard and the provision of data to the smartcard. Specifically, the instructions enable the interpretation module 204 to access and transform and/or extract use-case related information to and from the smartcard during command and response application protocol data unit operations. For example, the generated script file 304 contains a) location in the smartcard where a particular piece of information (or data) is present, e.g. "customerID" is present in application 11111. file 3. The generated script file 304 would also recite data transformation functions needed to convert the information (or data) to the bytes stored in the location on the smartcard. The script file 304 could also specify some user specific or use case specific constants needed for the transformation functions. The script interface 202, the interpretation module 204 and the APDU interface 206 may be configured to access data in storage 210 during operations.

The generation of the script file 304 may comprise generating a data structure which can be input into the interpretation module 204. The script file 304 may be crafted in the domain-specific language used in the domain of the smartcard, i.e. loyalty card, transport, access control. The generation of the data structure may comprise providing an interface for the user to configure the data structure in the domain-specific language which can be processed by the interpretation module 204. The user may be an expert in the field of the smartcard (e.g. loyalty cards, access control cards) and the domain specific language specific to the field of the smartcard but have no expertise in the general purpose language which is used to execute the smartcard logic using the logic module 208. That is to say, the user may specify the data structure in the domain-specific language associated with the field of application.

Alternatively or additionally, the generation of the data structure may comprise entering the requirements of the user into a graphical user interface which helps the user requirements which converts the user requirements into the script file 304.

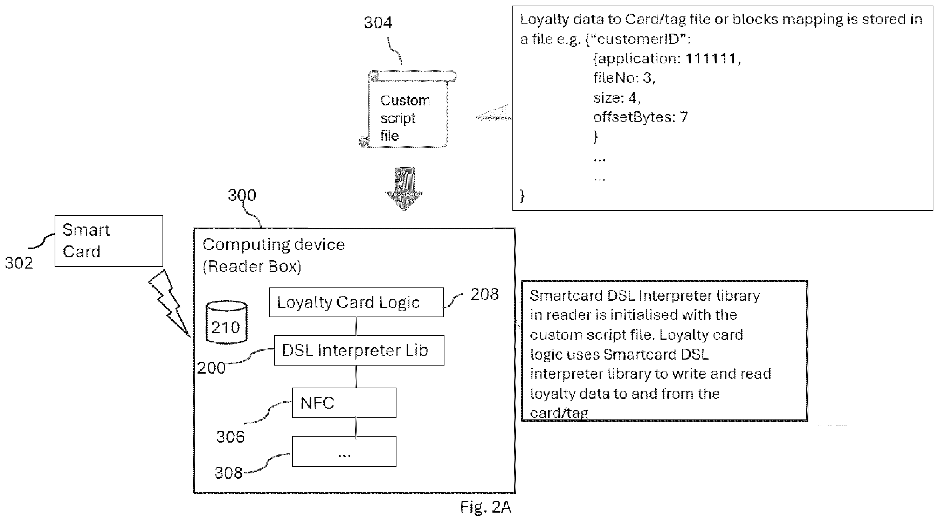

An example of the generated script file 304 is illustrated in Figure 2A. The script file defines a data name "customerID" and then a data locator in terms of an application number, a file number, a size of the data corresponding to the data name and the offset number of Bytes where the data is to be read from and/or written to. The generated script may contain one or more other data names and corresponding data locators.

In a step S104, the script file 304 is received at the script interface 202. The script interface 202 then provides the script file 304 to the interpretation module 204. This is step S106.

The interpretation module 204 converts the instructions in the script file 304 into a command set which are then used to configure the smartcard reader 300 to interact with the smartcard in a way which is defined by the user in the instructions. The interpretation module 204 provides an interpreter for the domain-specific language of the field of the smartcard (or another domain-specific language if necessary). That is to say, the interpretation module 204 executes the instructions in the script 304 without converting the script into the high-level language (e.g. Java, C++) used in the logic module 208. The interpretation module 204 can then provide output which can be used by the logic module 208.

In an example, the interpretation module 204 may comprise a smartcard DSL interpreter library which is initialized with the custom script file 304. The loyalty card logic 208 may use smartcard DSL interpreter library to write and read loyalty data to and from the card/tag.

The interpretation module 204 may even be embedded in a computing device distinct from the smartcard reader 300. It may be implemented within a desktop application which generates the commands for the smartcard interaction. In this case the smartcard reader is simply used to relay the commands rather than generate the commands.

The command set is converted by formatting the instructions in accordance with the standard ISO/IEC 7816-4 so that the command data of the command application protocol data unit (command APDU) identifies the data specified by the data names provided in the script 304. That is to say, when the interaction occurs (which will be described below) the command APDU identifies the required data on the smartcard based on the instructions in the script file 304.

That is to say, configuring smartcard readers and smartcard operations is simplified as the user simply needs to identify the data in the smartcard to the smartcard reader (via the interpretation module 204) using the script file and then the smartcard reader uses those instructions to retrieve the required data from the smartcard and perform the subsequent operations, which will be described in further detail below.

In order to more clearly illustrate this concept, we must describe it in terms of how an interaction with a smartcard (virtual or physical) 304 is processed. The example described relates to loyalty cards which are typically used in the retail environment. However, it will be understood that this application is not limiting and this series of steps could be applied to any application where a smartcard is used.

In a step S108, an interaction request is received at the APDU interface 206. The request is provided to the APDU interface 206 when a smartcard 302 carrying, for example, an near-field communication (NFC) chip is placed on an NFC tag 308 and a request for interaction with the smartcard reader 300 is detected by the NFC tag 308. The NFC receiver 306 responds by processing the request for interaction into a request which is provided to the APDU interface 206. The APDU interface 206 then transmits a request to the interpretation module 204 for an interaction with the smartcard 302 to be initialised.

The interaction request may be associated with an interaction to process a financial transaction, where payment data may be identified using the script 304 and the transaction may be processed using the interpretation module 204 and the instructions in the script 304.

In a step S110, responsive to receiving the request from the APDU interface 206, the first command is sent via the NFC receiver 306 to the smartcard in accordance with the smartcard APDU standard (ISO/IEC 7816-4). In this example, the interpretation module 204, using the script file 304, interprets that the first step is authentication of the smartcard 302 and also determines, from the script detailing the authentication of the smartcard 302 that the authentication of the smartcard can only proceed with the provision of the public key for the card. In accordance with ISO/IEC 7816-4, the command data part of the command APDU is populated with the data provided in the data locator field associated with the data name "Public Key" contained in the script 304 to form the first command sent in step S 110.

In step S112, the public key is received from the smartcard 302 in accordance with the response APDU standard (ISO/IEC 7816-4). That is to say, the response to the first command is received from the smartcard 302 in step S112. Alternatively or additionally, the hash of the public key may be requested and provided if the application determines that the public key is not to be exchanged. Alternatively or additionally, a cryptographic signature, which could be based on a public or private key, could be requested and provided.

In a step S114, the public key is authenticated using standard techniques for public key authenticated. This is also determined by the script 304. It is included in the script and interpreted by the interpretation module 204. In other examples, other processing steps may be performed based on data retrieved in step S112. These processing steps also determined by the script 304.

In applications where security is not so important, it may be that the first command does not request a public key or other security identifier. In all embodiments, the NFC receiver 306 may be configured to communicate with the smartcard in accordance with ISO/IEC 14443 A, ISO/IEC 14443 B and JIS X6319-4. Data received by the NFC receiver 306, either from the APDU interface 206 or the smartcard, is processed by the NFC receiver 306 in accordance with these standards. Whilst this example is described in terms of an NFC receiver 306, it will be appreciated this is an example only and that other technologies such as radio frequency identification (RFID) or Bluetooth Low Energy (BLE) (in the form of BLE Badge Beacons).

In a step S 116, if the public key (or signature) is authenticated , then, in accordance with the command set generated using the instruction set, the interpretation module 204 proceeds to the next command. For example, after the authentication, the customer data may be required. This is defined in the instruction set in the script file 304 and then interpreted by the interpretation module 204. The next command APDU is then formatted. The command data part of the command APDU is then populated with the data name for the customer data, "CustomerID", for example, and the associated data locator data for the customer data. This implements the instruction contained in the script file 304 which requires a request for the customer data. The customer data is then received via the NFC interface 306 in accordance with the format of a response APDU (i.e. as part of response data in accordance with ISO/IEC 7816-4).

Authentication of a public key or signature may use cryptographic keys provided by the script file 304 or the cryptographic keys may be provided by the interpretation module 204 itself or to the interpretation module 204 by an external entity such as another computing device in communication with the interpretation module 204 or another entity which is external to the processing resource 200. The interpretation module 204 may also deploy key diversification to generate further keys based on the smartcard data received at the APDU interface 206. The authentication of data may comprises the application of cryptographic operations utilising at least one symmetric key which may be identified using the script 304 or may be specified by a manufacturer or an operative of the smartcard reader 300. The symmetric key may be provided or pointed to by the script. A verification operation may verify that the symmetric key is identical to one stored on the smartcard or on the smartcard reader.

In a step S118, the interpretation module 204 interprets (from the script 304) that the next piece of data which is to be obtained is the purchase data. The interpretation module 204 then converts this into a command to the smartcard (to be transmitted via the NFC interface 306) where the data locator data (associated with the data name "PurchaseData") is used to populate the command data part of the command APDU and a command APDU is transmitted to the smartcard 302 to implement the request for the purchase data. The purchase data is then returned using the response APDU.

In a step S120, the interpretation module 204 interprets (from the script 304) that the next piece of data to be read from or written to the smartcard is to be determined by the logic module 208. That is to say, the interpretation module 204 may obtain an application indication from the logic module 208 and this may be used to determine the piece of data which is to be retrieved from the smartcard. The logic module 208 flags to the interpretation module 204 that the smartcard reader is to be used to update loyalty points on the smartcard 302. The interpretation module 204 determines from this flag that the next piece is data which is to be obtained is the loyalty points count from the smartcard 302. The loyalty points count is defined in the script using data name ("LoyaltyProgram") and data locator data which identifies where the loyalty points count can be obtained on the smartcard 302. The interpretation module 204 then generates a command APDU which uses the data locator data to populate the command data part of the command APDU to implement the request for the loyalty points count which is transmitted to the smartcard 302. The loyalty points count is then obtained.

The data obtained from the smartcard can then be combined into an input data set for the logic module 208 in a step S122. The logic module 208 receives the input data set and it can be used as an input to functions in the logic module 208, wherein, in a step S124, the logic module 208 executes further steps which seek out offer data which can be associated with the customer associated with the interaction. The data contained in the input data set can then be provided to an external entity such as, for example, a server used to store customer and purchase data with a command to store that data and update a record associated with the customer. That is to say, the logic module, on receiving the input data set, performs further processing steps to control an external entity. This is step S124.

The logic module 208 is programmed in a high-level programming language (e.g. Java, C++) which is typically a different language from the domain-specific language used to code the script file 304 and the interpretation module 204.

The interpretation module 204 may then execute the final instruction provided in script file 304 which is to write an updated loyalty points count to the smartcard 302. The interpretation module 204 converts the instruction into a command APDU (in accordance with ISO/IEC 7816-4). The purchase data may also be updated to reflect a purchase associated with the smartcard. That is, the interpretation module 204 generates a pair of update operations (one for the loyalty points and one for the purchase data) which are then encoded into the command data part of the command APDU which is transmitted to the smartcard 302 in a step S126. That is to say, the interpretation module 204 is configured to generate create, read, update and delete operations based on the script file 304.

The logic module 208, in other examples, may control a door responsive to interaction by the smartcard reader 300 with a door access smartcard. That is to say, the logic module 208 executes instructions based on instructions from the script 304 (as interpreted by interpretation module 204). That is to say, in steps S114 to S120, responsive to authentication of a public key associated with the door access provided by the smartcard 302 (in step S114) the interpretation module 204 may ask for the identifier for the individual (in step S 116), the card details of the individual (in step S118) and the access history of the individual (in step S120), the logic module 208 may execute logic to control the door, responsive, maybe, to a verification of the individual, i.e. checking whether they are prevented from access or even performing a process such as multi-factor authentication..

That is to say, the interpretation module 204 performs the smartcard operations required by the user. The interpretation module 204 is configured to perform the operations such as creating the card structure (including authentication, creation of files etc.) writing data to files, reading/validating data from the smartcard and updating the data.

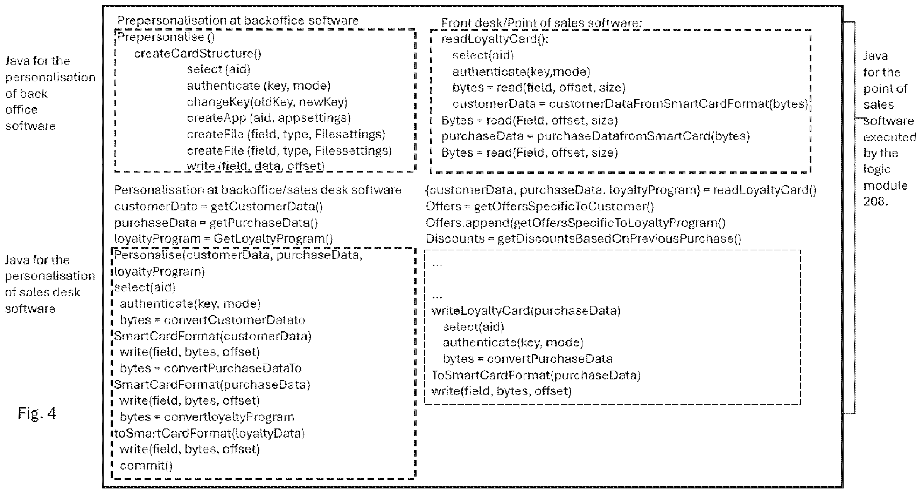

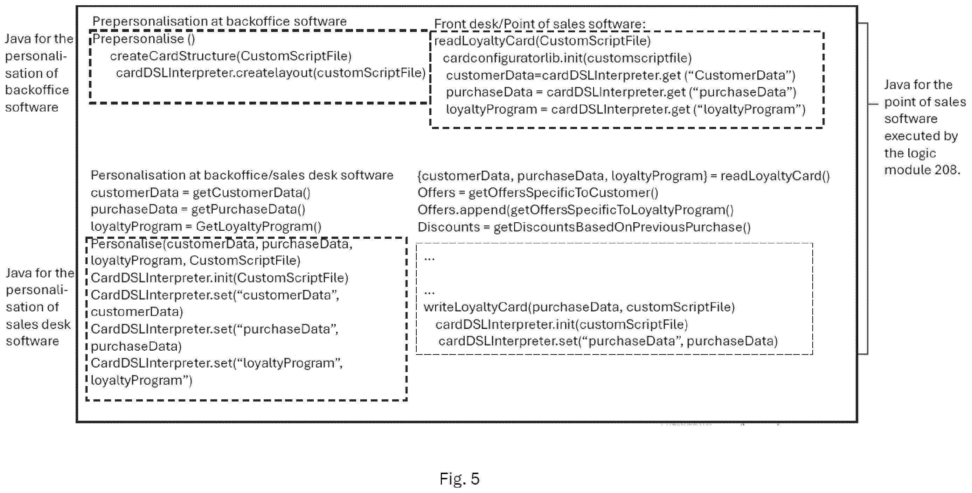

More specifically and as set out by way of example, the interpretation module 204 provides a plurality of functions which can be used by the script 304 to obtain data from the smartcard and also perform CRUD operations on the smartcard. These functions can be used without needing to reprogram the logic module or to have any knowledge of the language used to form the logic module 208. It also removes the need to constantly reprogram firmware for the smartcard reader 300. The functionality can be understood by comparing the script used for the logic module 208 with and without the interpretation module 104. This is illustrated in Figures 4 and 5.

In Figure 4 it can be seen that the personalization of the backoffice smartcard software, personalization of sales desk software and point of sales software associated with the logic module 208 require considerable knowledge of the internal data structures of smartcards and security protocols. The development of these portions would pose difficulty for software and firmware development in the absence of the interpretation module 204. These parts of the software (i.e. the parts outlined with a dash in Figure 4) are time consuming for customers to develop on their own, increasing the effort involved with the development of smartcard based solutions. It also draws focus away from the domain their application is focused on. It may also be that pre-personalization, personalization and field operations are done by different pieces of software/tools. This increases the effort and time allocation associated with the solution.

In Figure 5, it shows the program code within the logic module 208 using the interpretation module 204 to process data which has been obtained using the interpretation module 204 to interpret the script 304. It can seen that the script is used as an input to the interpretation module 204 and the data obtained based on the script is fed into the logic and simplifies the code and reduces the code. It also means that any changes to the command-response APDU is more straightforward to implement as it involves only changes to the script and not to the logic module 208.

In summary, the interpretation module 204 is developed to generate commands (with data, from the script 304) which are relevant to smartcard types, i.e. configured for the specific application of the smartcard e.g. loyalty cards, transport, access control etc. Custom script requirements vary for each of these use cases and the interpretation module 204 can be used to make it easy to change the reader for each use case.

The domain specific language used by the interpretation module 204 may be specific to the application and it may even enable a domain-specific language to be developed for the specific application. The domain specific language may also be generic and the interpretation module 204 allows it to be used for all use cases, where the instructions, data names and locator data vary.

Optionally or additionally, application specific data could be built into the command-response interactions. That is, using the script, it is possible to generate command APDU's which identify and obtain application specific data. The combination of the script 304 and the interpretation module 204 make it more straightforward to configure the retrieval of such application specific data.

For example, in the transport example, where further security may be of interest, the initial command APDU could request more specific data about the owner of the smartcard, i.e. the individual associated with the smartcard, which is in addition to the public key, cryptographic signature or identifier (e.g. name). Such data could, for instance, represent biometric information about the owner (e.g. fingerprint structure or iris information) and this could then be used in the following operations, e.g. using the biometric information in the access control.

The response APDU, where it is typically limited in its size, could include the requested data and maybe in a compressed form. In the loyalty card example, the more specific data about the owner could, again, be biometric information but also could be financial information to enable payments to be made into an associated account - again, with a reduced number of interactions. This can be built into the command response interactions and thus create use-case specific APDU interactions. In other applications, the public key or cryptographic signature could be omitted from the command-response interactions.

Optionally or additionally, use-case specific CRUD operations could also be implemented. That is, for some use cases, i.e. transport, the location where access to transport infrastructure may be stored based on the commands generated from the script. In another use case, the location where a payment is made may not be stored, again, based on the commands generated from the script.

In summary, after the interpretation module 204 utilises the script to extract data from the smartcard (in accordance with the command set) the interpretation module 204 maps the obtained data into an input for the logic module 208, i.e. a get and set interface is provided by the interpretation module 204.

The logic module 208 processes the obtained data and can then pass it onto another entity in the form of a command or a CRUD operation.

The interpretation module 204 provides a library that could be integrated into the workflow of systems. One example, at a reception environment wherein smartcards are read to enable access to a room, the processing resource could reside in a desktop application connected to the smartcard reader or in the smartcard reader in itself. The desktop application then provides a data structure via the script to the interpretation module 204.

The interpretation module 204, in providing interpretation of a domain-specific language into a command set for both an interaction with a smartcard and for commands to an external entity (via the logic module 208), facilitates smartcard operations (including authentication, creating files etc.), writing data to files, reading/validating and updating the data as required.

The script may be crafted in a domain-specific language which is specific to the use case or may be specific to a specific technical application.

The interpretation module 204 may be understood to apply a software library, which may reside in a computing device (such as the smartcard reader 300) where commands (with data, from the custom script) are generated specific to smartcard types, where the smartcard type is determined by the custom script.

The facilitates the deployment of smartcard-based solutions as the solution deployment team only needs to know the standard functions supported by the interpreter, which completely abstracts the generation of smartcard commands. Thereby, supports in faster deployment of smartcard-based solutions, easier upgrades, and overall lesser maintenance costs.

As said above, the computing device could be a smartcard reader itself, in which case the commands are generated and exchanged from the smartcard reader to the smartcard, over NFC interface (as an example). The computing device could even be desktop application, a cloud service or an embedded/IOT device. For example, if the interpretation module 204 runs within a desktop application, then the desktop application generates the commands, and uses a smartcard reader (connected to the desktop application) to relay commands with the smartcard.

The interpretation module 204 makes it easier to develop software for smartcards and smartcard readers and specifically makes it easier to read and write to smartcards, abstracting the complexities away from the software/firmware development.

The interpretation module 204 can be created for different reader platforms and can be written in multiple languages such as C++, Java etc. It enables use case specific data to be exchanged with smartcards by providing the interpretation module 204 which provides a library of functions which can be used in the command-response interaction with the smartcard by the smartcard reader.

In summary, the interpretation module 204 enables the smartcard reader to make reading and writing to smartcards as simple as reading and writing from a dictionary data structure, abstracting the complexities away from the software/firmware development teams and enabling use-case specific application protocol data units and application specific CRUD operations to be set up for a smartcard. This simplifies the configuration of smartcard readers and expands their range of applicability.

It should be noted that the above-mentioned aspects and embodiments illustrate rather than limit the disclosure, and that those skilled in the art will be capable of designing many alternative embodiments without departing from the scope of the disclosure as defined by the appended claims. In the claims, any reference signs placed in parentheses shall not be construed as limiting the claims. The word "comprising" and "comprises", and the like, does not exclude the presence of elements or steps other than those listed in any claim or the specification as a whole. In the present specification, "comprises" means "includes or consists of" and "comprising" means "including or consisting of". The singular reference of an element does not exclude the plural reference of such elements and vice-versa. The disclosure may be implemented by means of hardware comprising several distinct elements, and by means of a suitably programmed computer. In a device claim enumerating several means, several of these means may be embodied by one and the same item of hardware. The mere fact that certain measures are recited in mutually different dependent claims does not indicate that a combination of these measures cannot be used to advantage.

## Claims

1. A computer-implemented method of processing data received on a smartcard reader from a smartcard, the method implemented by a processing resource, the method comprising:
obtaining instructions for a smartcard reader, wherein the instructions identify at least one of:
i) data and data locations on a smartcard; or
ii) at least one processing function for the data or data locations
wherein the instructions utilise a plurality of functions provided in a first programming language;
processing an interaction between the smartcard reader and the smartcard based on the instructions, wherein the processing comprises:
utilising the data and data locations to identify and obtain the data from the smartcard and provide data to the smartcard during the interaction; and
processing the data obtained from the smartcard based on the instructions to generate an input data set for the smartcard reader;
processing the input data set to generate a command for an entity external to the smartcard reader, wherein the processing utilises a second programming language distinct from the first programming language to process the input data set.

2. A method according to Claim 1, wherein the processing of the data obtained from the smartcard based on the instructions to generate an input data set comprises at least one of:
authentication of data associated with the smartcard;
verification of data associated with the smartcard; or
providing one of a create, read, update or delete operation for the smartcard.

3. A method according to Claim 2, wherein the authentication of data comprises authentication of a public key retrieved from the smartcard using data provided by the script.

4. A method according to Claim 2, wherein the mutual authentication between a smartcard and a smartcard reader and authentication of data comprises the application of cryptographic operations utilising at least one symmetric key.

5. A method according to Claim 4, wherein the at least one symmetric key is provided or pointed to by the script, wherein a verification operation verifies the symmetric key is identical to one on the smartcard.

6. A method according to any preceding claim, wherein obtaining instructions comprises:
receiving a script containing the instructions from an external entity at the smartcard reader; and
processing the script to extract the instructions.

7. A method according to any of Claims 1 to 6, wherein obtaining instructions comprises: receiving instructions from an external resource; wherein the instructions are generated based on input at an external entity.

8. A method according to any of Claims 1 to 8, wherein processing an interaction between the smartcard reader and the smartcard based on the instructions is responsive to a request for an interaction between a smartcard and a smartcard reader.

9. A method according to any of Claims 1 to 9, wherein utilising the data and data locations to identify and obtain the data from the smartcard during the interaction comprises formatting a command-response interaction with the smartcard.

10. A method according to any preceding claim, wherein generating a command for an entity external to the smartcard reader comprises processing the input data set to determine whether the smartcard can enable access to a resource or location; and enabling access based on the processing of the input data set.

11. A method according to any preceding claim, wherein generating a command for an entity external to the smartcard reader comprises processing the input data set to determine whether an individual associated with the smartcard is a customer associated with a customer profile.

12. A system configured to implement the method of Claims 1 to 11.

13. A smartcard reader comprising a processor and memory including executable instructions that, as a result of execution by the processor, causes the reader to perform the method of Claims 1 to 11.

14. A payment processing device comprising a processor and memory including executable instructions that, as a result of execution by the processor, causes the reader to perform the method of Claims 1 to 11.

15. A non-transitory computer readable storage medium having stored thereon executable instructions that, as a result of being executed by a processor of a computer system, cause the computer system to at least perform the method of any one of claims 1 to 11.
